# EUROPEAN PATENT SPECIFICATION

(11) **EP 1 916 266 B1**
(45) Date of publication and mention of the grant of the patent: **23.12.2009**
(21) Application number: 06022276.7
(22) Date of filing: 25.10.2006
(51) Int. Cl.: C08F 265/02

(54) **Process for the production of grafted and cross-linked polymers**
Herstellungsverfahren für gepfropfte und vernetzte Polymere
Procédé de production de polymères greffés et réticulés

(43) Date of publication of application: 30.04.2008
(73) Proprietor: Cognis IP Management GmbH, 40589 Düsseldorf (DE)
(72) Inventor: Merlet, Stéphanie,, 92100 Boulogne (FR); LaMarca, William, 77124 Cregy les Meaux (FR); Valls, Ramon, 08002 Barcelona (ES); Abribat, Benoit, 77981 Asint Fageau Ponthierry Cedex (FR); Andrioletti, Florence, 94220 Charenton-le-Pont (FR)
(74) Representative: Fabry, Bernd

(56) References cited:
- FR-A- 2 814 465
- US-A1- 3 499 874

## Description

### Field of the invention

The present invention relates to the area of polymers and refers to an improved process for the production of certain anionic comb polymers currently used in the building industry as superplasticizers for concrete or plaster retarders.

### Background of the invention

Polyolefinic acids, particularly polyacrylic acids, grafted with polyglycolethers and mono-methylpolyglycolethers (MPEG) and their use as superplasticizers are well known from literature. They provide high fluidity to high-strength cement and concrete compositions combined with an extremely low water-to-cement or concrete ratio. In addition they reduce the decrease in fluidity, which takes place after a certain time, and control the generation of foam during the making of the final preparations. Examples for the state of the art can be found *inter alia* in FR 2776285 B1 (Chryso), EP 1260536 A1 (BASF) or WO 97/039037 A1 (Mbt). Usually, manufacture of the grafted polymers takes place in two steps: firstly, the free-radical polymerisation is carried out in water, and then the esterification is conducted. Of course, prior to esterification the water has to be removed, which makes the process time-consuming and not very efficient.

Nevertheless, the reaction can also be conducted as a "one pot" process. For example, FR 28144465 B1 (Synthro) teaches to polymerise acrylic acid in MPEG as a solvent in the presence of azobis(isobutyronitrile) as an initiator and to start the subsequent esterification by adding p-toluene sulfonic acid as a catalyst. According to WO 99/002466 A1 (Arco), a similar process is suggested which differs from the Synthro process mainly by using tert. butylperoxybenzoate as the initiator. However, the state of the art still suffers from two disadvantages: firstly, it is desirous to save the addition of an esterification catalyst, and secondly, there is a need to reduce foam generation, since foaming of the reaction mixtures makes it difficult to control the reaction.

In this context, reference is also made to international patent application WO 06/050850 A1 (Cognis) disclosing anionic polymers useful as superplasticizers for concrete, which are obtained by polymerisation of (meth)acrylic acid or their esters with dipropylendiglycolacrylate (DPGDA), tripropylenglycoldiacrylate (TPGDA), acrylamidomethyl propanesulfonic acid (AMPS) and/or acryl acetate (AA) and subsequent treatment of the intermediates with mixtures of short- and long-chain alkylpolyalkyleneglycols. Another group of concrete plasticizers obtained from the polymerisation of maleic acid (anhydride) and (meth)acrylic acid is known from EP 1319676 A1 (Cognis). Polyacrylic acids grafted by polyethyleneglycols and their use as superplasticizers for concrete is also known from EP 1396506 A1 (Cognis).

Therefore the problem which underlies the present invention was to develop an improved one-pot process for the manufacture of poly(meth)acrylate polymers grafted and cross-linked with MPEG which avoids the disadvantages of the state of the art as outlined above and particularly does not need any esterification catalyst while foam generation is reduced at the same time.

### Detailed description of the invention

The present invention refers to a process for the production of grafted and cross-linked polymers comprising the following steps:
(a) Free-radical polymerisation of (meth)acrylic acid in monomethylpolyethyleneglycol (MPEG) as the solvent,
(b) Esterification of the intermediate thus obtained with said solvent and
(c) Neutralisation and solubilisation of the final polymer in water,
to obtain an aqueous polymer dispersion, which is characterised in that
(i) Polymerisation is conducted in the presence of a polymerisation initiator having also the capability to form acids as decomposition products during the reaction, and
(ii) Esterification is conducted in the presence of EO/PO block polymers.

During the first step of the process in which (meth)acrylic acid is polymerised in the presence of a free-radical source, using monomethylpolyethyleneglycol (typically comprising 10 to 20 ethylene oxide units) as the solvent, small amounts of the MPEG are grafted onto the polymer chains due to a transfer of a hydrogen radical taken from the methylether group of the MPEG. These grafted polymer chains, however, still contain the terminal OH groups. Surprisingly it has been observed that the use of certain polymerisation initiators - like, for example, ammonium persulfate - leads to the formation of small amounts of inorganic acids, which are sufficient to catalyse the subsequent esterification step so that it is not necessary to add any further (acidic) esterification catalysts. In order to reduce the amount of foam generated in the process, it has been found useful to add small amounts of non-ionic EO/PO block polymers which also graft on the polymer chains. Combining the two features according to the present invention allows the production of grafted and cross-linked polymers in a shorter time at a better conversion and of higher quality. In addition, the process is much easier to conduct than other processes known from the state of the art.

### Polymerisation

In the first step of the process, acrylic acid, methacrylic acid or their mixtures are subjected to a free-radical polymerisation. As explained above, the reaction preferably takes place in a non-aqueous media, more precisely, the agent which later acts as the alcohol compound in the esterification process - MPEG - is used as the solvent; nevertheless small amounts of water of better solubilisation can be present. As a matter of fact, the process according to the present invention is therefore not simply limited to said special polyglycolether but would be useful in the same manner for any other reaction with a comparable OH-compound. The process is conducted in the presence of a source for free radicals to start the polymerisation. According to the present invention, initiators are chosen which have the capability to also form small amounts of (inorganic) acids, for example as the result of thermal decomposition during the exothermic polymerisation reaction. Suitable examples are persulfate salts and, in particular, ammonium persulfate, which are added in typical amounts of 1 to 10 Mol-% calculated on the amount of (meth)acrylic acid. The amounts of acids - in case of persulfates it is of course sulfuric acid - are not formed initially but later in the process, so that also esterification takes place with a temporal delay. This is important since otherwise the solvent would be consumed too early. The reaction conditions for the polymerisation are not critical and can be taken from the state of the art. Usually, the reaction is conducted at a temperature of from about 90 to about 110°C. The molecular weight of the polymer thus obtained lies typically between 4,000 and 40,000 Dalton depending on the MPEG molecular weight (250 to 5000).

### Esterification

As is typical for a "one-pot" process, there is no defined point in time where polymerisation is finished and esterification starts. Overall the polymerisation reaction is conducted about 1 to 4 h, and preferably about 2 h, mainly depending on the degree of grafting/cross-linking and molecular weight. Usually, the esterification is conducted at a temperature between 120 to 150 °C. It is advantageous to remove the water of condensation in order to shift mass balance in favour of the desired products. Therefore, pressure is reduced to 10 to 50 mbar. Since the alcohol compound is also used as a solvent, there is no defined molecular ratio between (meth)acrylic acid and MPEG to be adjusted. Typically one part of (meth)acrylic acid is solved in 2 to 10 parts of MPEG, which would represent a molar ratio of about 25 to 250. Usually the esterification is completed within 2 to 4 h.

The EO/PO block polymers are directly added to the esterification mixture and are also grafted onto the poly(meth)acrylates. Typically, these copolymers
- exhibit molecular weights of about 500 to about 10.000 Dalton, and preferably of 1.000 to 5.000 Dalton, and
- comprise 2 to 10 ethylene oxide units, and 5 to 20 propylene oxide units.

Typical examples are adducts of about 2 to about 10 Mol, and preferably 4 to 5 Mol ethylene oxide, and about 8 to about 12 Mol, and preferably 10 to 11 Mol propylene oxide, to saturated or unsaturated fatty alcohols having 6 to 22 carbon atoms, and preferably 12 to 18 carbon atoms or their technical mixtures, like e.g. C_{12/14} coco fatty alcohol or C_{16/18} tallow fatty alcohol. Preferably a C_{16/18}-fatty alcohol+4EO+ 11PO adduct is used which is sold by Cognis France, S.A.S under the trademark Bublex^{®} 250. Usually said EO/PO block polymers are added in amounts of 0.1 to 5 % b.w. - calculated on the total reaction mixture.

### Neutralisation and Solubilisation

Once the esterification has come to an end - which can be seen from the fact that no further water is separated off - the polymer is neutralised by adding alkali hydroxide, for example aqueous sodium or potassium hydroxide solution, to convert the acids into their salts. Finally, the product is diluted with water to obtain a dispersion showing a solid content of typically 20 to 50 % b.w., and preferably 30 to 45 % b.w.

### Industrial application

The grafted polymers obtained according to the inventive process provide high fluidity and better workability to cement, concrete and plaster compositions, and can therefore be used as so-called superplasticizers for concrete or plaster retarders.

### Examples

### Example 1

A reactor was loaded with 55.4 g MPEG-550 under nitrogen bubbling at room temperature and heated to 100 °C. Then 24.3 g acrylic acid and 5.06 g ammonium persulfate, both solubilised in about 15 g of water, were continuously added over a period of about 2 hours. After the polymerisation had been completed, the mixture was heated to about 140 °C and pressure decreased to about 30 mbar. About 1 g of Bublex^{®} 250 was added. The mixture was stirred for about 3 h under these conditions and the water of condensation was continuously removed. Finally the mixture was cooled to 80 °C, pH was adjusted to about 7 by adding aqueous sodium hydroxide solution, and water was added to obtain the polymer dispersion in the form of a brownish solution showing a solid content of 35 % b.w.

## Claims

1. Process for the production of grafted and cross-linked polymers comprising the following steps:
(a) Free-radical polymerisation of (meth)acrylic acid in monomethylpolyethylene-glycol (MPEG) as the solvent,
(b) Esterification of the intermediate thus obtained with said solvent and
(c) Neutralisation and solubilisation of the final polymer in water,
to obtain an aqueous polymer dispersion, **characterised in that**
(ii) Polymerisation is conducted in the presence of a polymerisation initiator having also the capability to form acids as decomposition products during the reaction, and
(iii) Esterification is conducted in the presence of EO/PO block polymers.

2. Process according to claim 1, **characterised in that** said initiator is an inorganic persulfate.

3. Process according to claims 1 and/or 2, **characterised in that** said initiator is ammonium persulfate.

4. Process according to any of claims 1 to 3, **characterised in that** the esterification is conducted in the absence of any other esterification catalyst.

5. Process according to any of claims 1 to 4, **characterised in that** said EO/PO block polymers are also grafted onto the poly(meth)acrylate.

6. Process according to any of claims 1 to 5, **characterised in that** said EO/PO block polymers exhibit molecular weights of about 500 to about 10.000 Dalton.

7. Process according to any of claims 1 to 6, **characterised in that** said EO/PO block polymers comprise 2 to 10 ethylene oxide units.

8. Process according to any of claims 1 to 7, **characterised in that** said EO/PO block polymers comprise 5 to 20 propylene oxide units.

9. Process according to any of claims 1 to 8, **characterised in that** said EO/PO block-polymer is C_{16/18}-fatty alcohol+4EO+11PO.

10. Process according to any of claims 1 to 9, **characterised in that** said EO/PO block polymers are added in amounts of 0.1 to 5 % b.w. - calculated on the total reaction mixture.

## Patentansprüche

1. Verfahren zur Herstellung gepfropfter und quervernetzter Polymere enthaltend die folgenden Schritte:
(a) freie radikalische Polymerisation von (Meth)acrylsäure in Monomethylpolyethylenglykol (MPEG) als Lösemittel;
(b) Veresterung des so erhaltenen Zwischenproduktes mit dem genannten Lösemittel; und
(c) Neutralisation und Solubilisierung des Endproduktes in Wasser unter Erhalt einer wässrigen Polymerdispersion,
**dadurch gekennzeichnet, dass**
(i) die Polymerisation in Gegenwart eines Polymerisationsstarters durchgeführt wird, der zudem in der Lage ist, als Zersetzungsprodukte während der Reaktion Säuren zu bilden; und
(ii) die Veresterung in Gegenwart von EO/PO-Blockpolymeren durchgeführt wird.

2. Verfahren nach Anspruch 1, **dadurch gekennzeichnet, dass** der Starter ein anorganisches Persulfat darstellt.

3. Verfahren nach den Ansprüchen 1 und/oder 2, **dadurch gekennzeichnet, dass** der Starter Ammoniumpersulfat darstellt.

4. Verfahren nach mindestens einem der Ansprüche 1 bis 3, **dadurch gekennzeichnet, dass** die Veresterung in Abwesenheit anderer Veresterungskatalysatoren durchgeführt wird.

5. Verfahren nach mindestens einem der Ansprüche 1 bis 4, **dadurch gekennzeichnet, dass** die EO/PO-Blockpolymeren ebenfalls auf die Poly(meth)acrylate gepfropft werden.

6. Verfahren nach mindestens einem der Ansprüche 1 bis 5, **dadurch gekennzeichnet, dass** die EO/PO-Blockpolymere ein Molekulargewicht von etwa 500 bis etwa 10.000 Dalton aufweisen.

7. Verfahren nach mindestens einem der Ansprüche 1 bis 6, **dadurch gekennzeichnet, dass** die EO/PO-Blockpolymere 2 bis 10 Ethylenoxideinheiten aufweisen.

8. Verfahren nach mindestens einem der Ansprüche 1 bis 7, **dadurch gekennzeichnet, dass** die EO/PO-Blockpolymere 5 bis 20 Propylenoxideinheiten aufweisen.

9. Verfahren nach mindestens einem der Ansprüche 1 bis 8, **dadurch gekennzeichnet, dass** die EO/PO-Blockpolymere ein C_{16/18}-Fettalkohol+4EO+11PO Addukt darstellen.

10. Verfahren nach mindestens einem der Ansprüche 1 bis 9, **dadurch gekennzeichnet, dass** die EO/PO-Blockpolymere in Mengen von 0,1 bis 5 Gew.-% - bezogen auf die gesamte Reaktionsmischung - zugegeben werden.

## Revendications

1. Procédé de fabrication de polymères greffés et réticulés comprenant les étapes suivantes :
(a) polymérisation par radicaux libres d'acide (méth)acrylique dans du monométhylpolyéthylène-glycol (MPEG) en tant que solvant,
(b) estérification de l'intermédiaire ainsi obtenu avec ledit solvant et
(c) neutralisation et solubilisation du polymère final dans de l'eau,
pour obtenir une dispersion polymère aqueuse,
**caractérisé en ce que**
(ii) la polymérisation est réalisée en présence d'un initiateur de polymérisation qui est également capable de former des acides en tant que produits de décomposition pendant la réaction, et
(iii) l'estérification est réalisée en présence de polymères séquencés EO/PO.

2. Procédé selon la revendication 1, **caractérisé en ce que** ledit initiateur est un persulfate inorganique.

3. Procédé selon les revendications 1 et/ou 2, **caractérisé en ce que** ledit initiateur est le persulfate d'ammonium.

4. Procédé selon l'une quelconque des revendications 1 à 3, **caractérisé en ce que** l'estérification est réalisée en l'absence de tout autre catalyseur d'estérification.

5. Procédé selon l'une quelconque des revendications 1 à 4, **caractérisé en ce que** lesdits polymères séquencés EO/PO sont également greffés sur le poly(méth)acrylate.

6. Procédé selon l'une quelconque des revendications 1 à 5, **caractérisé en ce que** lesdits polymères séquencés EO/PO présentent des poids moléculaires d'environ 500 à environ 10 000 Daltons.

7. Procédé selon l'une quelconque des revendications 1 à 6, **caractérisé en ce que** lesdits polymères séquencés EO/PO comprennent 2 à 10 unités oxyde d'éthylène.

8. Procédé selon l'une quelconque des revendications 1 à 7, **caractérisé en ce que** lesdits polymères séquencés EO/PO comprennent 5 à 20 unités oxyde de propylène.

9. Polymère selon l'une quelconque des revendications 1 à 8, **caractérisé en ce que** ledit polymère séquencé EO/PO est un alcool gras en C_{16/18} + 4 EO + 11 PO.

10. Polymère selon l'une quelconque des revendications 1 à 9, **caractérisé en ce que** lesdits polymères séquencés EO/PO sont ajoutés en quantités de 0,1 à 5 % en poids, calculées par rapport à la totalité du mélange réactionnel.
